# EUROPÄISCHE PATENTANMELDUNG

(11) **EP 0 731 607 A1**
(43) Veröffentlichungstag der Anmeldung: **11.09.1996**
(21) Anmeldenummer: 96102962.6
(22) Anmeldetag: 28.02.1996
(51) Int. Cl.: H04N 7/14

(54) **Schaltungsanordnung zur Anzeige und zur Regelung von Umgebungslichtverhältnissen**

(30) Priorität: 10.03.1995 DE 19508623
(71) Anmelder: Alcatel SEL Aktiengesellschaft, D-70435 Stuttgart (DE)
(72) Erfinder: Wirbitzki, Peter, 71706 Markgröningen (DE); Willhaus, Werner, 70569 Stuttgart (DE); Rivoir, Jürgen, 75181 Pforzheim (DE)
(74) Vertreter: Knecht, Ulrich Karl, Dipl.-Ing.

(57) **Zusammenfassung**

Die Benutzer von Bildtelefonen oder von Mutimediaterminals können nicht feststellen, ob die sie umgebenden Umgebungslichtverhältnisse während einer Übertragung stets von guter Qualität für eine Übertragung zu einem weiteren Terminal sind.

Vorsehen einer Anzeige über die Umgebungslichtverhältnisse während eines Telefonats und Regelung derselben.

Mittels einer Schaltungsanordnung die ein Photoelement (F) zur Aufnahme von einfallendem Licht beinhaltet, wird ein Signal (II) entsprechend der Umgebungslichtverhältnisse gebildet. Das Signal (II) wird zusammen mit einem Bildsignal (I) zur Anzeige gebracht oder dient zur Regelung.

## Beschreibung

Die Erfindung betrifft eine Schaltungsanordnung zur Anzeige von Umgebungslichtverhältnissen einer Bildaufnahme- und Bildwiedergabeeinrichtung. Des weiteren betrifft die Erfindung eine Schaltungsanordnung zur Regelung von Umgebungslichtverhältnissen einer Bildaufnahme- und Bildwiedergabeeinrichtung.

Aus dem Stand der Technik sind beispielsweise Bildtelefone bekannt, die sowohl über eine Eigenbildkontrolle, als auch über eine Einstellungsmöglichkeit von Farbe, Helligkeit und Kontrast verfügen. Die Einstellungsmöglichkeiten von Farbe, Helligkeit und Kontrast dienen zur Einstellung eines von einem weiteren Benutzer empfangenen Bildes. Des weiteren bieten diese Bildtelefone eine sogenannte Bild-in-Bild-Funktion an. Die Funktion der Eigenbildkontrolle ist so zu verstehen, daß zu Beginn eines Telefonats das Eigenbild gezeigt wird. Mit dieser Eigenbildkontrolle zu Beginn des Telefonats kann kontrolliert werden, welche Qualität das von einem selbst gesendete Bild aufweist, dies aber im Bezug darauf, ob der gesendete Bildausschnitt gut gewählt ist, oder ob z.B. nur ein Teilbereich gesendet wird.
( Bildtelefon XITEL 'Da wird mancher Anblick zum schönsten Augenblick'; aus: Prospekt; von: Telekom; Februar 1994).

Aufgabe der Erfindung ist es, eine Schaltungsanordnung vorzusehen, die es einem Benutzer einer Bildaufnahme- und Bildwiedergabeeinrichtung ermöglicht, jederzeit festzustellen, ob das von ihm an ein weiteres Bildaufnahme- und Bildwiedergabe gesendetes Bild von guter Qualität ist, um es gegebenenfalls zu korrigieren.

Dies wird erfindungsgemäß gelöst durch die Schaltungsanordnung des Patentanspruchs 1 oder durch die Schaltungsanordnung des Patentanspruchs 6.

Vorteile der Erfindung bestehen darin, daß jederzeit eine hohe Bildqualität beim empfangenden Benutzer einer Bildaufnahme- und Bildwiedergabeeinrichtung erreicht werden kann, und dies nicht auf einem rein subjektiven Eindruck eines Benutzers beruht. Diese hohe Bildqualität ist unabhängig von den Raumverhältnissen und der Tageszeit, an dem eine Übertragung stattfindet. Ein weiterer Vorteil ist, daß das empfangene Bild einer weiteren Bildaufnahme- und Bildwiedergabeeinrichtung nicht ausgeblendet werden muß, um eine erneute Eigenbildkontrolle durchzuführen, oder aber bei einer Bild-in-Bild-Technik die Bildqualität aus einem stark verkleinerten Bild abzuleiten.

Weitere vorteilhafte Ausgestaltung der Erfindung sind in Unteransprüchen 2 bis 5 und den Unteransprüchen 7 bis 8 zu entnehmen.

Im folgenden wird die Erfindung anhand von Figuren und Ausführungsbeispielen näher erläutert.

Folgende Figuren zeigen:
- Fig. 1:: Schaltungsanordnung zur Anzeige von Umgebungslichtverhältnissen gemäß Patentanspruch 1,
- Fig. 2:: Schaltungsanordnung zur Regelung von Umgebungslichtverhältnissen nach Patentanspruch 6.

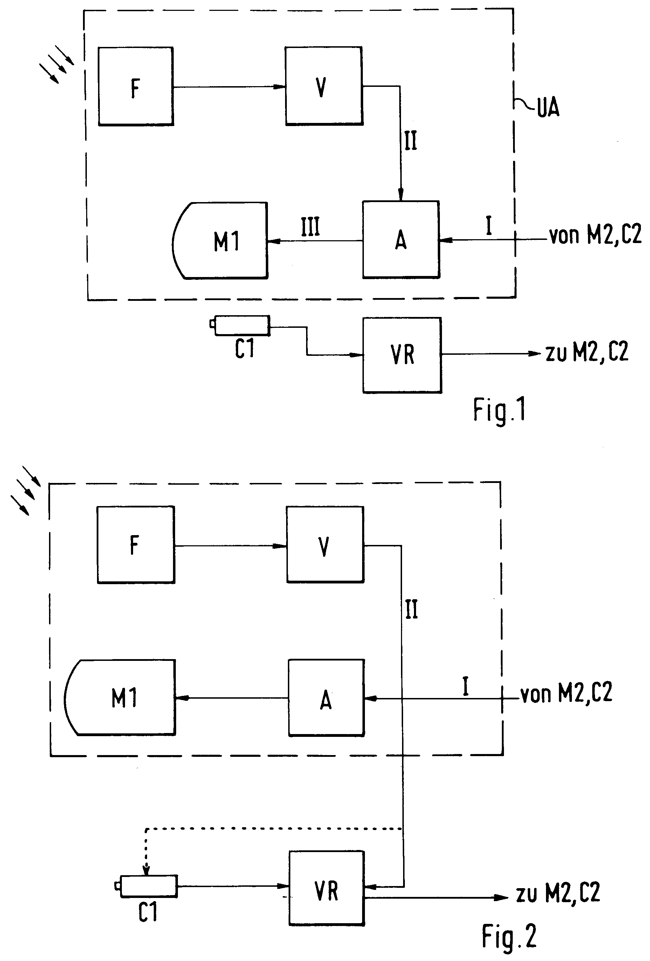

Im folgenden wird eine Schaltungsanordnung zur Anzeige von Umgebungslichtverhältnissen anhand eines Ausführungsbeispiels und mit der Fig. 1 näher erläutert.

Eine Schaltungsanordnung UA zur Anzeige von Umgebungslichtverhältnissen in einer ersten Bildaufnahme und Bildwiedergabeeinrichtung M1, C1, besteht aus mindestens einem Photoelement F. Dieses Photoelement F dient zur Aufnahme von einfallendem Licht. Das Photoelement F ist mit einer Verstärkerschaltung V verbunden. Diese Verstärkerschaltung V erzeugt ein, dem einfallenden Licht proportionales Signal II. Dieses Signal II wird auf ein Mittel A gegeben. Dieses Mittel A empfängt des weiteren ein von einer zweiten Bildaufnahme- und Bildwiedergabeeinrichtung M2, C2, gesendetes Bildsignal I. Das gesendete Bildsignal I wird in dem Mittel A mit dem proportionalen Signal II gemischt.

Das so gemischte Signal III wird zur Wiedergabe auf die Bildwiedergabeinrichtung M1 gegeben. Auf dieser Bildwiedergabeeinrichtung M1 wird das Bildsignal reproduziert und eine Anzeige des dem einfallenden Licht proportionalen Signals erfolgt ebenfalls.

Die Form der Anzeige kann wahlweise eine analoge Anzeige, oder aber eine digitale Anzeige sein. Eine weitere Möglichkeit ist es, eine balkenförmige Anzeige vorzusehen. Der Gegenstand der Anzeige steht in einem direkten Verhältnis zu der Belichtungsstärke.

Vorzugsweise wird das Photoelement F, daß das einfallende Licht aufnimmt, in Richtung der Bildaufnahmeeinrichtung C1 angebracht. Eine Möglichkeit für eine Bildaufnahmeeinrichtung C1 ist beispielsweise eine handelsübliche Kamera oder aber eine Kamera wie sie bei der Bildtelefonie verwendet wird. Eine Möglichkeit für eine Bildwiedergabeeinrichtung M1, ist beispielsweise ein Monitor wie er aus der Bildtelefonie oder bei Multimediaterminals bekannt ist. Das von der Bildaufnahmeeinrichtung C1, also der Kamera, aufgenommene Bildsignal wird über eine Verstärkungsregelung VR auf die zweite Bildaufnahme- und Bildwiedergabeeinrichtung M2, C2 übertragen. Dies erfolgt z. B. unter Verwendung eines Telekommunikationsnetzwerks z. B. einem Breitbandnetz.

Eine weitere Möglichkeit der Anzeige ist es, in dem Mittel A, mittels einer Schwellwertauswertung das zu dem einfallenden Licht proportionale Signal II so auszuwerten, daß die Anzeige auf der Bildwiedergabeanordnung M1 direkt anzeigt, ob die Umgebungslichtverhältnisse ausreichend sind oder nicht. Das kann dergestalt sein, daß mittels eines visuellen Mittels eine Unterscheidung zwischen zu dunkel und zu hell angezeigt wird.

Im folgenden wird ein weiteres Ausführungsbeispiel gemäß Patentanspruch 6 anhand von Fig. 2 näher erläutert.

Eine Schaltungsanordnung UA zur Regelung von Umgebungslichtverhältnissen in einer ersten Bildaufnahme- und Bildwiedergabeeinrichtung M1, C1, besteht aus mindestens einem Photoelement F. Das Photoelement F dient zur Aufnahme von einfallendem Licht. Vorzugsweise wird dieses einfallende Licht in Richtung der Bildaufnahmeeinrichtung C1 aufgenommen. Ein Beispiel für eine Bildaufnahmeeinrichtung C1 ist beispielsweise eine handelsübliche Kamera und für eine Bildwiedergabeeinrichtung M1 ein Monitor eines Bildtelefons oder einer Multimediaeinrichtung. Das Photoelement F ist mit einer Verstärkerschaltung V verbunden. Die Verstärkerschaltung V erzeugt ein dem einfallenden Licht proportionales Signal II. Das proportionale Signal II wird auf eine Verstärkungsregelung VR gegeben. Die Verstärkungsregelung VR ist direkt mit einem ersten Bild mit einer ersten Bildaufnahmeeinrichtung C1 verbunden. In der Verstärkungsregelung VR findet beispielsweise eine Schwellwertbestimmung statt, die anzeigt, ob die Umgebungslichtverhältnisse zufriedenstellend sind oder nicht. Für den Fall, daß die Umgebungslichtverhältnisse nicht zufriedenstellend sind, erfolgt direkt eine Regelung der ersten Bildaufnahmeeinrichtung.

In einem weiteren Beispiel kann beispielsweise das Signal II direkt auf die Bildaufnahmeeinrichtung C1 gegeben werden (dies ist in der Fig. 2 durch die gepunktete Linie angezeigt). Von der zweiten Bildaufnahme- und Bildwiedergabeeinrichtung M2, C2 kommende Bildsignale werden auf ein Mittel A gegeben, welches direkt mit der Bildwiedergabeeinheit M1 verbunden ist. Auf diesem Wege werden von der zweiten Bildaufnahme- Bildwiedergabeeinrichtung kommende Bildsignale auf dem Monitor angezeigt.

Eine spezielle Form einer Bildwiedergabe-Bildaufnahmeeinrichtung ist z.B. ein Monitor mit einem halbdurchlässigen Spiegel, hinter dem sich eine Kamera befindet. Bei dieser integrierten Lösung ist es besonders vorteilhaft, das mindestens eine Photoelement F hinter dem halbdurchlässigen Spiegel anzuordnen. Dies insbesondere, weil ein Teil der Belichtungsstärke, oder der Umgebungslichtstärke von dem halbdurchlässigen Spiegel absorbiert wird.

Eine weitere vorteilhafte Ausgestaltung ist es, mehrere Photoelemente F zur Abdeckung des gesamten Bildfeldes der Kamera anzuordnen. Dies wird insbesondere dann notwendig, wenn ein flächenhaft großer Bildbereich abgedeckt werden muß. Zu diesem Zweck wird eine Vielzahl von Photoelementen F flächenhaft verteilt. In der mit der Vielzahl der Photoelemente verbundenen Verstärkerschaltung V wird das Signal II über eine Mittelwertbildung des von den Photoelementen aufgenommenen Lichtes gebildet.

Besondere Verwendung finden die hier angegebenen Schaltungsanordnungen zur Anzeige und Regelung für Bildtelefone, oder auch bei Multimediaterminals. Bildtelefone und Multimediaterminals, die eine verhältnismäßig große Abmessung haben, werden so verwendet, daß sie an einem festen Platz in einem Büro oder in einem Haushalt angebracht sind. Ändern sich nun die Umgebungslichtverhältnisse, z.B. durch auftretende Wolken in der Außenumgebung während eines Telefonats, so ist mittels dieser Schaltungsanordnungen eine Anzeige oder Regelung dergestalt möglich, daß davon auszugehen ist, daß jederzeit eine Übertragung mit einer hohen Bildqualität stattfindet.

## Patentansprüche

1. Schaltungsanordnung (UA) zur Anzeige von Umgebungslichtverhältnissen von einer ersten Bildaufnahme- und Bildwiedergabeeinrichtung (M1, C1), mit mindestens einem Photoelement (F) zur Aufnahme von einfallendem Licht, mit einer damit verbundenen Verstärkerschaltung (V), die ein dem einfallenden Licht proportionales Signal (II) erzeugt, mit einem Mittel (A), welches ein von einer zweiten Bildaufnahme- und Bildwiedergabeeinrichtung (M2, C2) gesendetes Bildsignal (I) empfängt und mit dem proportionalen Signal (II) mischt, und das so gemischte Signal (III) zur Wiedergabe auf die Bildwiedergabeeinrichtung (M1) gegeben wird, auf der das Bildsignal reproduziert wird und eine Anzeige des dem einfallenden Licht proportionalen Signals erfolgt.

2. Schaltungsanordnung (UA) nach Patentanspruch 1, bei der die Anzeige eine analoge Anzeige, oder eine digitale Anzeige oder eine balkenförmige Anzeige zur Anzeige einer Belichtungsstärke ist.

3. Schaltungsanordnung nach Anspruch 1, bei der das proportionale Signal (II) in dem Mittel (A) mittels einer Schwellwertauswertung so ausgewertet wird, daß die Anzeige auf der ersten Bildwiedergabeanordnung (M1) direkt anzeigt, ob die Umgebungslichtverhältnisse einem Schwellwert entsprechen oder nicht.

4. Schaltungsanordnung nach einem der Ansprüche 1 bis 3, bei der die Bildwiedergabeanordnung (W) einen halbdurchlässigen Spiegel aufweist, und bei der sich das mindestens eine Photoelement (F) hinter dem halbdurchlässigen Spiegel befindet.

5. Schaltungsanordnung nach einem der Ansprüche 1 bis 3, bei der eine Vielzahl von Photoelementen (F) flächenhaft verteilt sind, und in der damit verbundenen Verstärkerschaltung (V) das Signal (II) aus einer Mittelwertbildung des von den Fotoelementen aufgenommenen Lichtes.

6. Schaltungsanordung (UA) zur Regelung von Umgebungslichtverhältnissen von einer ersten Bildaufnahme- und Bildwiedergabeeinrichtung (M1, C1) mit mindestens einem Photoelement (F) zur Aufnahme von einfallendem Licht, mit einer damit verbundenen Verstärkerschaltung (V), die ein dem einfallenden Licht proportionales Signal (II) erzeugt, mit einer Verstärkungsregelung (VR) die das proportionale Signal (II) empfängt und die mit der ersten Bildaufnahmeeinrichtung (C1) verbunden ist und die entsprechend der Umgebungslichtverhältnisse eine Regelung der ersten Bildaufnahmeeinrichtung (C1) vornimmt.

7. Schaltungsanordnung nach Anspruch 6, bei der die Bildwiedergabeanordnung (W) einen halbdurchlässigen Spiegel aufweist, und bei der sich das mindestens eine Photoelement (F) hinter dem halbdurchlässigen Spiegel befindet.

8. Schaltungsanordnung nach einem der Ansprüche 6 oder 7, bei der eine Vielzahl von Photoelementen (F) flächenhaft verteilt sind, und in der damit verbundenen Verstärkerschaltung (V) das proportionale Signal (II) aus einer Mittelwertbildung des von den Photoelementen aufgenommenen Lichtes.

9. Verwendung der Schaltungsanordnung nach Anspruch 1 oder 6 für ein Bildtelefon.

10. Verwendung der Schaltungsanordnung nach Anspruch 1 oder 6 für ein Multimediaterminal.
